# EUROPEAN PATENT APPLICATION

(11) **EP 2 100 916 A1**
(43) Date of publication of application: **16.09.2009**
(21) Application number: 08290240.4
(22) Date of filing: 13.03.2008
(51) Int. Cl.: C08K 5/5317

(54) **Acid scavenger compositions**

(71) Applicant: Clariant International Ltd., 4132 Muttenz 1 (CH)
(72) Inventor: Staniek, Peter, 79589 Binzen (DE); Ribourdouille, Yann, 68440 Eschentzwiller (FR)
(74) Representative: Mikulecky, Klaus

(57) **Abstract**

The invention relates to the use of mono- or disalts of metals of a phosphonic acid or mixtures of phosphonic acids or their half ester salts of metals, as acid scavengers (neutralizers), particularly for the protection of polymeric substrates or production equipment against the degradation caused by acidic impurities during manufacturing, processing, storage or use of polymers.

## Description

The invention relates to the use of mono- or disalts of metals of a phosphonic acid or mixtures of phosphonic acids or their half ester salts of metals, as acid scavengers (neutralizers), particularly for the protection of polymeric substrates or production equipment against the degradation caused by acidic impurities during manufacturing, processing, storage or use of polymers.

It is known that acidic byproducts formed during the manufacturing or processing of polymers, e.g. hydrochloric acid (HCl) originating from the hydrolysis of Ziegler-Natta catalysts, can cause or accelerate the degradation of polymeric matter or induce the corrosion of the metallic surfaces of the production equipment. Even the release of only small quantities of hydrochloric acid to the environment has to be avoided, as HCl is classified as a toxic substance.

To circumvent these issues, it is common practice in the polymer manufacturing to add so called acid scavengers (neutralizers, antiacids) to the polymers to capture such acids. Typically these are metal salts of longer chain carboxylic acids like calcium, zinc or sodium stearates, lactates, natural or synthetic silicates like hydrotalcites, metal oxides (e.g. magnesium oxide, calcium oxide, zinc oxide), metal carbonates (e.g. calcium carbonate) or metal hydroxides. (see e.g. A. Holzner, K. Chmil in H. Zweifel, Plastic Additives Handbook, 5th Ed., Hanser publisher, Munich 2001, Chapter 4 Acid Scavengers). Metal stearates, esp. calcium stearate (CaSt), are the most commonly used scavengers in the plastics field. In the following, all these compounds are called "classical neutralizers"

Besides their neutralizing properties these "classical neutralizers" show also negative aspects. Almost all of them are either non fusible at processing temperatures or not soluble in the polymer. Homogenization problems, resulting in specks, streaks or diminution of transparency, can occur if not properly processed. These inhomogenities may cause optical as well technical drawbacks for the final or finished products which result in economical losses. Also the reaction products of the neutralization, the corresponding free acids, like e.g. stearic acid, may cause problems, such as white or colored specks in the polymer article, streaks in polymer films, blooming and formation of deposits on the film surface but also on the equipment for polymer production (e.g. deposits at dies or rolls). As a consequence the quality of the final or finished product is lowered or even no longer usable for the targeted application and finally causing financial losses. Furthermore financial drawbacks can occur from shutdown times required for frequent cleaning of the equipment due to the formation of deposits.

Therefore, improved solutions are required. It has been found that, surprisingly, phosphonate based acid scavengers can overcome the technical problems.

The present invention provides for the use of at least one or more compounds selected from the group of phosphonates of the formulas (1) to (4) as acid scavengers in the polymer treatment, particularly manufacturing, processing, storage or use of polymers.

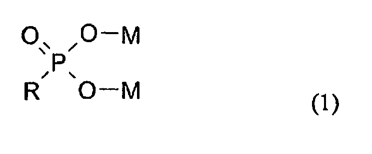

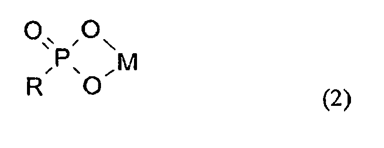

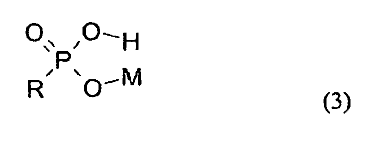

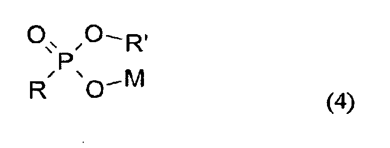

In the formulas 1 to 4
- R: is selected from the group of C₆₋₂₀₀ alkyl, C₆₋₂₀₀ alkenyl, C₆₋₂₀₀ alkyl-aryl, and C₆₋₂₀₀ alkyl-heteroaryl;
- R': is selected from the group of C₁₋₃₆ alkyl, C₂₋₃₆ alkenyl, C₇₋₃₆ alkyl-aryl, C₆₋₃₆ alkyl- heteroaryl, and
- M: is selected from the group 1 ( e.g. Li, Na, K, Rb, CS), 2 (e.g.Be, Mg, Ca, Sr, Be), and 3 ( e.g Sc, Y, La, Ce) of the periodic table of the elements or is Ti, Zn or Al.

Preferred residues for the compound of the formulas (1) to (4) are
- R: selected from the group of C₈₋₃₆ alkyl, C₈₋₃₆ alkenyl, C₇₋₃₆ alkyl-aryl, and C₇₋₃₆ alkyl-heteroaryl;
- R': selected from the group of C₁₋₂₄ alkyl, C₂₋₂₄ alkenyl, C₇₋₂₄ alkyl-aryl, and C₆₋₂₄ alkyl-heteroaryl; and
- M: selected from the group of Li, Na, K, Mg, Ca, Al, Ti, Zn and Al.

Even more preferred residues for the compound of the formulas (1) to (4) are
- R: selected from the group of C₁₂₋₂₄ alkyl, C₁₂₋₂₄ alkenyl, C₇₋₂₄ alkyl-aryl, and C₇₋₂₄ alkyl-heteroaryl;
- R': selected from the group of C₁₋₁₈ alkyl, C₂₋₁₈ alkenyl, C₇₋₁₈ alkyl-aryl, C₆₋₁₈ alkyl- heteroaryl; and
- M: selected from the group of Na, K, Mg, Ca, Zn and Al;

Particularly preferred residues for compound of formulas (1) to (4) are
- R: selected from C₁₄₋₂₂ alkyl, C₁₄₋₂₂ alkenyl, C₇₋₂₂ alkyl-aryl, C₇₋₂₂ alkyl-heteroaryl;
- R': selected from the group of C₁₋₁₈ alkyl, C₂₋₁₈ alkenyl, and C₇₋₁₈ alkyl-aryl; and
- M: selected from the group ofNa, K, Mg, Ca and Zn;

Most preferred residues for compound of formulas (1) to (4) are
- R: selected from the group of C₁₄₋₁₈ alkyl, C₇₋₁₆ alkyl-aryl and C₁₄₋₁₈ alkenyl;
- R': selected from the group of C₁₋₁₈ alkyl and C₂₋₁₈ alkenyl; and
- M: selected from the group of Na, K or Ca;

Preferred embodiments of the compounds of formulas (1) to (4) are compounds (1) to (3), more preferred compounds of formulas (1) and (2) and most preferred compounds of formula (1), whereas for each of these selections each of the definitions of the residues, preferred residues, even more preferred residues, particularly preferred residues and most preferred residues may be selected.

In the definitions of all embodiments for the compounds of formulas 1 to 4 as mentioned above, in case of M being a multivalent ion, the stoechiometry of such compounds of formulas (1) to (4) is adapted such that neutral molecules will occur. Any anions or groups , e.g. halogen , hydroxyl, carbonate, sulfate, may be used to achieve said neutral molecules. Preferably halogen or hydroxy groups may be coordinated to the metal ions to achieve neutrality. In case M is selected from multivalent elements, also coordination polymeric complexes may be formed in such a way that electroneutrality of the molecule is obtained.

In the definitions of all embodiments for the compounds of formulas 1 to 4 as mentioned above, the alkyl chain ofR and/or R' independently of each other is uninterrupted or interrupted by oxygen, sulfur, nitrogen or phosphorous atoms or C₃₋₁₈cycloalkyl and if R is an alkyl-aryl moiety, the aryl moiety is unsubstituted or substituted by C₁₋₁₂alkyl (linear or branched), OH, NHR', NH2, SH, OR' or SR'

The compounds of formula 1 to 4 can be produced in serveral ways, known to the skilled person in the art, e.g. from alkenes by radical, acid, base or non catalysed addition of hypophosphorous acid H₃PO₂ (or its esters) followed by subsequent oxidation or phosphorous acid H₃PO₃ (or its esters); by substitution reaction of tris- or bis- alkylphosphites (e.g. by Arbuzov reaction) or by grafting, initiated by radicals, e.g. oxygen, of phosphorous trichloride onto the corresponding alkane and (in situ) oxidation. Resulting esters are hydrolysed by refluxing in mineral acids and the salts are prepared by reaction of the acids with appropriate metal salts, e.g. hydroxides, oxides, carbonates or the like. Compilations of such methods are given in e.g. Kosolapoff, G.M..; Maier, L., Organophosphorous Chemistry, John Wiley&Sons, New York 1972 or K. Sasse in Houben/Weyl, Methoden der Organischen Chemie, Bd. 12, Thieme Verlag, Stuttgart 1964.

When the compound or mixture of compounds of formulas (1) to (4) are used in combination with "classical neutralizers" , preferred "classical neutralizers" are selected from the group of hydrotalcites and C₁₂₋₃₆carboxylates, as well as oxides, hydroxides or carbonates of Na, Mg, Ca or Zn;
more preferred "classical neutralizers" are selected from the group of hydrotalcites, C₁₄₋₂₄carboxylates, oxides and hydroxides ofNa, Mg, Ca or Zn;
most preferred "classical neutralizers" are selected from the group of hydrotalcites, C₁₂₋₂₂carboxylates and oxides of Na, Mg, Ca or Zn; and
especially preferred "classical neutralizers" are hydrotalcites, sodium stearate, magnesium oxide, magnesium stearate, calcium oxide, calcium stearate, zinc oxide or zinc stearate.

For said combination of each of these classes of "classical neutralizers" with one or more compounds of formulas 1 to 4 with each of the definitions of the residues, preferred residues, more preferred residues, most preferred residues and especially preferred residues resp. the preferred, more preferred and most preferred classes of the inventive compounds (1) to (4) as given above may be independently selected.

If mixtures of the compound of formulas (1) to (4) and "classical neutralizers" as defined above are used, such mixtures comprise a ratio of 10-90 wt% phosphonates and 90-10wt% of "classical neutralizers", preferably 20-80 wt% phosphonates and 80-20wt% of "classical neutralizers", more preferably 30-70 wt% phosphonates and 70-30wt% of "classical neutralizers", most preferably 40-60 wt% phosphonates and 60-40wt% of "classical neutralizers"

The compound of formulas 1to 4 and mixtures thereof are applied in polymeric compositions in amounts of about 0.0001 wt% to 5 wt% preferably about 0.01 wt% to 2 wt% more preferably about 0.025 wt% to 1 wt% and most preferably about 0.05 wt% to 0.5 wt% based on the respective polymer. Such amounts apply also when said compounds are used in combination with classical neutralizers.

Examples of polymers are:
1. Polymers of monoolefins and diolefins, for example polypropylene, polyisobutylene, polybut-1-ene, poly-4-methylpent-1-ene, polyisoprene or polybutadiene, as well as polymers of cycloolefins, for example of cyclopentene or norbornene; furthermore polyethylene (which optionally can be crosslinked); for example, high density polyethylene (HDPE), polyethylene of high density and high molar mass (HDPE-HMW), polyethylene of high density and ultrahigh molar mass (HDPE-UHMW), medium density polyethylene (HMDPE), low density polyethylene (LDPE), linear low density polyethylene (LLDPE), branched low density polyethylene (BLDPE).
   Polyolefins, i.e. polymers of monoolefins exemplified in the preceding paragraph, in particular polyethylene and polypropylene, can be prepared by various, and especially by the following, methods:
   a) free-radical polymerization (normally under high pressure and at elevated temperature)
   b) catalytic polymerization using a catalyst that normally contains one or more metals of group IVb, Vb, VIb or VIII of the Periodic Table. These metals usually have one or more ligands, such as oxides, halides, alcoholates, esters, ethers, amines, alkyls, alkenyls and/or aryls that may be either π- or σ-coordinated. These metal complexes may be in the free form or fixed on substrates, for example on activated magnesium chloride, titanium(III) chloride, alumina or silicon oxide. These catalysts may be soluble or insoluble in the polymerization medium. The catalysts can be active as such in the polymerization or further activators may be used, for example metal alkyls, metal hydrides, metal alkyl halides, metal alkyl oxides or metal alkyloxanes, the metals being elements of groups Ia, IIa and/or IIIa of the Periodic Table. The activators may be modified, for example, with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1., for example mixtures of polypropylene with polyisobutylene, polyethylene with polyisobutylene, polypropylene with polyethylene (for example PP/HDPE/LDPE) and mixtures of different types of polyethylene (for example LDPE/HDPE) with one another.
3. Copolymers of monoolefins and diolefins with each other or with other vinyl monomers, for example ethylene-propylene copolymers, linear low density polyethylene (LLDPE), very low density polyethylene (VLDPE) and mixtures thereof with low density polyethylene (LDPE), propylene-but-1-ene copolymers, propylene-isobutylene copolymers, ethylene-but-1-ene copolymers, ethylene-hexene copolymers, ethylene-methylpentene copolymers, ethylene-heptene copolymers, ethylene-octene copolymers, propylene-butadiene copolymers, isobutylene-isoprene copolymers, ethylenealkyl acrylate copolymers, ethylenealkyl methacrylate copolymers, ethylene-vinyl acetate copolymers and their copolymers with carbon monoxide or ethylene-acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned under 1., for example polypropylene-ethylene-propylene copolymers, LDPE-ethylene-vinyl acetate copolymers, LDPE-ethylene-acrylic acid copolymers, LLDPE-ethylene-vinyl acetate copolymers, LLDPE-ethylene-acrylic acid copolymers and alternating or random polyalkylene-carbon monoxide copolymers and mixtures thereof with other polymers, for example polyamides.
4. Polymers derived from unsaturated alcohols and amines or the acyl derivatives or acetals thereof, such as polyvinyl alcohol, polyvinyl acetate, polyvinyl stearate, polyvinyl benzoate, polyvinyl maleate, polyvinyl butyral, polyallyl phthalate or polyallyl melamine; as well as their copolymers with olefins mentioned under 1.
5. Polyacetals such as polyoxymethylene and those polyoxymethylenes which contain comonomers, for example ethylene oxide; polyacetals modified with thermoplastic polyurethanes, acrylates or MBS.
6. Polyphenylene oxides and sulfides, and mixtures thereof with styrene polymers or polyamides.
7. Polyamides and copolyamides derived from diamines and dicarboxylic acids and/or from aminocarboxylic acids or the corresponding lactams, such as polyamide 4, 6, 6/6, 6/10, 6/9, 6/12, 4/6, 12/12, 11 and 12, aromatic polyamides starting from m-xylene, diamine and adipic acid; polyamides prepared from hexamethylenediamine and isophthalic and/or terephthalic acid and with or without an elastomer as modifier, for example poly-2,4,4-trimethylhexamethylene terephthalamide or poly-m-phenylene isophthalamide. Block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol. As well as polyamides or copolyamides modified with EPDM or ABS; and polyamides condensed during processing (RIM polyamide systems).
8. Polyureas, polyimides, polyamide-imides, polyether imides, polyester amides, polyhydantoins and polybenzimidazoles.
9. Polyesters derived from dicarboxylic acids and dialcohols and/or from hydroxycarboxylic acids or the corresponding lactones, such as polyethylene terephthalate, polybutylene terephthalate, poly-1,4-dimethylolcyclohexane terephthalate, polyhydroxybenzoates, as well as block polyether esters derived from hydroxyl-terminated polyethers; and also polyesters modified with polycarbonates or MBS.
10. Polycarbonates and polyester carbonates.
11. Polysulfones, polyether sulfones and polyether ketones.
12. Crosslinked polymers derived from aldehydes on the one hand and phenols, urea or melamine on the other hand, such as phenol/formaldehyde resins, urea/formaldehyde resins and melamine/formaldehyde resins.
13. Drying and non-drying alkyd resins.
14. Unsaturated polyester resins derived from copolyesters of saturated and unsaturated dicarboxylic acids with polyhydric alcohols and vinyl compounds as crosslinking agents, and also halogen-containing modifications thereof of low flammability.
15. Mixtures (polyblends) of the aforementioned polymers, for example PP/EPDM, polyamide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/MBS, PPO/HIPS, PPO/PA 6.6 and copolymers, PA/HDPE, PA/PP, PA/PPO, PBT/ABS or PBT/PET/PC.
16. Natural and synthetic organic substances which constitute pure monomeric compounds or mixtures thereof, examples being mineral oils, animal or vegetable fats, oils and waxes, or oils, waxes and fats based on synthetic esters (e.g. phthalates, adipates, phosphates or trimellitates), and also blends of synthetic esters with mineral oils in any desired proportion by weight, as are employed, for example, as spin finishes, and aqueous emulsions thereof.

Preferred examples of polymers are:
I. Polymers of monoolefins and diolefins, for example polypropylene, polyisobutylene, polybut-1-ene, poly-4-methylpent-1-ene, polyisoprene or polybutadiene, as well as polymers of cycloolefins, for example of cyclopentene or norbornene; furthermore polyethylene (which optionally can be crosslinked); for example, high density polyethylene (HDPE), polyethylene of high density and high molar mass (HDPE-HMW), polyethylene of high density and ultrahigh molar mass (HDPE-UHMW), medium density polyethylene (HMDPE), low density polyethylene (LDPE), linear low density polyethylene (LLDPE), very low density polyethylene (VLDPE), branched low density polyethylene (BLDPE).
II. ethylene-vinyl acetate copolymers, LDPE-ethylene-vinyl acetate copolymers, LDPE-ethylene-acrylic acid copolymers, LLDPE-ethylene-vinyl acetate copolymers,
III. Polyacetals such as polyoxymethylene and those polyoxymethylenes which contain comonomers, for example ethylene oxide; polyacetals modified with thermoplastic polyurethanes.
IV. Polyamides and copolyamides derived from diamines and dicarboxylic acids and/or from aminocarboxylic acids or the corresponding lactams, such as polyamide 4, 6, 6/6, 6/10, 6/9, 6/12, 4/6, 12/12, 11 and 12, aromatic polyamides starting from m-xylene, diamine and adipic acid; polyamides prepared from hexamethylenediamine and isophthalic and/or terephthalic acid and with or without an elastomer as modifier, for example poly-2,4,4-trimethylhexamethylene terephthalamide or poly-m-phenylene isophthalamide. Block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol. As well as polyamides or copolyamides.
V. Polyesters derived from dicarboxylic acids and dialcohols and/or from hydroxycarboxylic acids or the corresponding lactones, such as polyethylene terephthalate, polybutylene terephthalate, poly-1,4-dimethylolcyclohexane terephthalate, polyhydroxybenzoates, as well as block polyether esters derived from hydroxyl-terminated polyethers; and also polyesters modified with polycarbonates.
VI. Polycarbonates and polyester carbonates.
VII. Mixtures (polyblends) of the aforementioned polymers, for example PP/EPDM, polyamide/EPDM, PVC/EVA, PC/PBT, PVC/CPE, PC/thermoplastic PUR, PA/HDPE, PA/PP, PA/PPO, PBT/PET/PC.

Most preferred polymers are polyolefins such as LDPE, LLDPE, VLDPE, HDPE, HDPE-HMW, HDPE-UHMW or PP, polyesters, polyamides, polycarbonates, polystyrene, copolymers of styrene, as well as copolymers and blends thereof.

Especially preferred polymers are polyolefins such as LDPE, LLDPE, VLDPE, HDPE, HDPE-HMW, HDPE-UHMW or PP, as well as copolymers and blends thereof

Even more preferred polymers are polyolefins such as LLDPE, VLDPE, HDPE or PP, as well as copolymers and blends thereof.

The compound according to the invention can be added to the polymer either at the end of the manufacturing process, during processing other than manufacturing or during preparation of intermediate or final articles.

Preferred is the addition at the end of the manufacturing process or during the first processing after the manufacturing and even more preferred the addition at the end of the manufacturing process.

The compound according the invention may be added as powders, granulates, compactates or extrudates of all kinds of preparation methods, in solid, liquid, molten, dissolved or dispersed form either as pure materials or in combination with other additives, processing aids or solvents.

The invention further relates to a composition, comprising a polymer and one or more acid scavengers according to formulas 1 to 4, as defined above.

The phosphonates according to the invention were found to be efficient neutralizers for polymeric compositions and showed at the same time improved processing quality in the polymeric composition, expressed by homogeneity and no indications of blooming, specks or streaks formation. Furthermore the formation of deposits on die and rolls is minimized.

The invention will be further explained by the examples without being limiting the specific embodiments described above.

### EXAMPLES

### EXAMPLE 1: Preparation of hexadecyl-phosphonic acid

In a 4.5 1 reactor equipped with a condenser and a mechanical stirrer is charged with 1.5 mol of hexadecene, 4.5 mol of diethyl phosphite and 5 mol% of manganese (II) acetate based on the hexadecene. The mixture is heated at reflux during 1 h and changing the aspect from pink solution to white a suspension. Then the reaction mixture is cooled down to ambient temperature.

2.5 1 of hydrochloric acid are slowly added and the colorless solution is heated at reflux for 3 hours. About 2/3 of the reaction volume is distilled off. The remaining aqueous solution is removed by phase-separation. The yellow oil is washed two times with hot water and dried. The resulting solid is filtered and washed with heptane. After drying, 360g of hexadecylphosphonic acid are obtained as a colorless powder.

### EXAMPLE 2: Preparation of Disodium hexadecyl-phosphonate

In a 6 1 reactor equipped with a mechanical stirrer and a Dean-Stark type water trap, 339 g of sodium hydroxide (10 N) are added to the slurry of the phosphonic acid of Example 1 in 3.75 1 of hexane. The suspension is refluxed for 1 h followed by azeotropical removal of the water. The reaction mixture is cooled down and the solid is filtered and washed with hexane. The white solid is dried to give 417g of sodium phosphonate.

### EXAMPLE 3: Preparation of Sodium ethyl-hexadecyl-phosphonate

According to the procedure of Example 1 the synthesis of the crude intermediate is performed, but the time for the subsequent hydrolysis is limited to only 30 min. The preparation of the mono sodium salt is performed according to example 2 by with only 170 g of 10 N sodium hydroxide solution.

### EXAMPLE 4: Application in LLDPE

The neutralizers are added to the LLDPE polymer melt, produced by a Ziegler-Natta slurry process, as slurry in Isopar in the concentrations given in the table below. After mixing, the polymer melt is extruded and granulated. To indicate the quality of the neutralization, the HCl concentration is measured in the off gas of the production process by mean of the Dräger-tubes for HCl. The acidity of the polymer is determined by alkalimetric titration of the grinded polymer as well in a corrosion test using mild steel plates (Corrosion Index)

| **Product** | **Conc. [wt%]** | **HCl in Off-Gas [ppm]** | **Acidity (alklimetric) [ppm HCl]** | **Corrosion Index** |
|---|---|---|---|---|
| Disodium hexadecylphosphonate (Ex. 2) | 0.05 | 19 | 0.05 | 0 |
| Disodium hexadecylphosphonate (Ex. 2) | 0.10 | 3.5 | 0.05 | 0.03 |
| Sodium ethyl-hexadecylphosphonate | 0.10 | 1.8 | 0.01 | 0 |
| Calcium Stearate (Comparison example) | 0.10 | 32 | 0.2 | 0.3 |

The results as shown in the table demonstrate clearly that the inventive phosphonates have significantly improved neutralization properties over the classical neutralizer calcium stearate, proven by lower HCl concentrations in the off gas as well as in the polymer (recalculated to ppm HCl). Also the protection of the equipment, expressed by the lower corrosion index, is significantly improved compared to the state of the art.

## Claims

1. Use of a compound or a mixture of compounds selected from the group of phosphonates of the formulas (1) to (4) 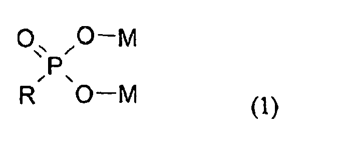 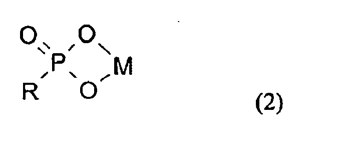 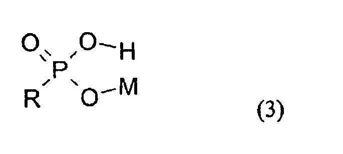 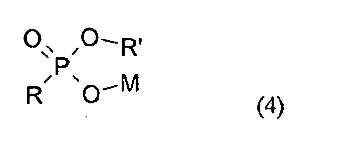 wherein
R is selected from the group of C₆₋₂₀₀ alkyl, C₆₋₂₀₀ alkenyl, C₆₋₂₀₀ alkyl-aryl, and C₆₋₂₀₀ alkyl-heteroaryl;
R' is selected from the group of C₁₋₃₆ alkyl, C₂₋₃₆ alkenyl, C₇₋₃₆ alkyl-aryl, C₆₋₃₆ alkyl-heteroaryl; and
M is selected from the group 1, 2, and 3 of the periodic table of the elements or is Ti, Zn or Al
as acid scavenger in polymers.

2. The use as claimed in claim 1, wherein
R is selected from the group of C₈₋₃₆ alkyl, C₈₋₃₆ alkenyl, C₇₋₃₆ alkyl-aryl, and C₇₋₃₆ alkyl-heteroaryl;
R' is selected from the group of C₁₋₂₄ alkyl, C₂₋₂₄ alkenyl, C₇₋₂₄ alkyl-aryl, and C₆₋₂₄ alkyl-heteroaryl; and
M is selected from the group of Li, Na, K, Mg, Ca, Al, Ti, Zn and Al.

3. The use as claimed in claim 1, wherein
R selected from the group of C₁₄₋₁₈ alkyl, C₇₋₁₆ alkyl-aryl and C₁₄₋₁₈ alkenyl;
R' selected from the group of C₁₋₁₈ alkyl and C₂₋₁₈ alkenyl; and
M selected from the group of Na, K or Ca;

4. The use as claimed in one or more of claims 1 to 3, wherein the R and/ or R' independently of each other is interrupted by oxygen, sulfur, nitrogen or phosphorous atoms or by C₃-₁₈cycloalkyl and ifR is an alkyl-aryl moiety, the aryl moiety is substituted by C₁-₁₂alkyl (linear or branched), OH, NHR', NH2, SH, OR' or SR'

5. A composition, comprising a polymer and one or more acid scavengers as defined in claims 1 to 4 with the proviso that the compound of formula (4) where R is methylene-(3,5-di-tertbutyl-4-hydroxy-phenyl), R' is ethyl and M is Ca is applied in the presence of at least one other phosphonate of formula (1) to (4), when used in combination with calcium or zinc stearates, metal oxides, hydroxides or carbonates or hydrotalcites.
